# EUROPEAN PATENT SPECIFICATION

(11) **EP 3 699 116 B1**
(45) Date of publication and mention of the grant of the patent: **08.06.2022**
(21) Application number: 19157967.1
(22) Date of filing: 19.02.2019
(51) Int. Cl.: B65G 45/12

(54) **SCRAPER BLADE UNIT & SCRAPER BLADE ASSEMBLY**
ABSTREIFERKLINGENEINHEIT UND ABSTREIFERKLINGENANORDNUNG
UNITÉ DE LAME DE RACLEUR ET ENSEMBLE DE LAME DE RACLEUR

(43) Date of publication of application: 26.08.2020
(73) Proprietor: R.H. Conveyor Services Limited, Swinton, South Yorkshire S64 8AB (GB)
(72) Inventor: Randerson, Oliver Charles, Swinton, South Yorkshire S64 8AB (GB)
(74) Representative: Franks & Co Limited

(56) References cited:
- EP-A1- 0 270 142
- DE-A1- 2 709 714
- GB-A- 2 221 440
- US-A- 4 787 500
- US-B1- 7 383 940

## Description

### Field of the Invention

The present invention relates to a scraper blade unit and a scraper blade assembly, particularly although not exclusively for use with an endless belt conveyor.

### Background of the Invention

Scraper blades for use with conveyor belts and which function to remove material adhering to or present on the surface of a conveyor belt are known. Conventional scraper blades typically comprise a blade located transversely to the main direction of movement of the conveyor belt, which in the instance of an endless conveyor belt, are normally mounted where the belt begins its return run after passing over the head roller. Such prior art scraper blades typically comprise a unitary edge which is resiliently urged into contact with the conveyor belt surface by a support structure to accommodate joins in the conveyor belt structure e.g. a vulcanised joint, or an array of metallic belt fastening hooks which may extend across the full width of the conveyor. Such unitary, resiliently urged structures are problematic because the resilience of the blade which permits movement over joins in the conveyor belt also prevent the blade from achieving thorough scraping when the belt does not have a smooth surface, for example when the belt includes projections or segmentations for the conveyance of materials uphill, conveyance of material at an angle, or when the belt comprises means for designated or separating carried goods into specified quantities e.g. cleated belts and chevron belts.

Belts suitable for use with both planar and non-planar conveyor belts are known, for example the applicant's earlier invention GB2346862B2 which discloses a non-unitary scraper blade comprising an elongate strip of synthetic parallel cuts which define individual finger-like projections, each finger-like projection capable of engaging with a conveyor belt. Whilst such non-unitary blades can deflect and thus can accommodate joins in the belt they parallel cuts which form the individual finger-like projections can become easily blocked by debris from the belt, essentially creating a unitary blade which no longer accommodates non-planar conveyor belts and require regular cleaning to maintain optimum performance. It is a further disadvantaged of known unitary scraper blades and GB2346862B2 whose finger-like projections are each in contact with the conveyor belt at the same time that the entire length of the scraper blade assembly is in contact with the conveyor belt at the same time causing increased strain and load/tension on the conveyor belt.

DE 27 09 714 A1, EP 0 270 142, GB 2 221 440 all disclose scraper blades with several projections attachable to a beam and arrangeable in two rows. All these documents disclose a scraper blade assembly according to the preamble of claims 1 and 12.

It is an object of the present invention to provide an improved conveyor belt scraper blade, suitable for use with non-planar surfaces, which minimises strain on the conveyor belt and is less prone to blockage than known scraper blades having finger-like projections.

The present invention is particularly suitable for use with chevron belts which may be used to convey materials against a gradient or at an angle.

The present invention is also suitable for use with cleated belts which is designed with protrusions which may also permit movement against a gradient or incline and can further be used to assist in controlling the amount of substance convey at each section of the belt. Such belts are commonly used in the food industry.

It is a further object of the invention to provide a scraper blade assembly which is suitable for use with non-planar surfaces, which minimises strain on the conveyor belt and is less prone to blockage than known scraper blade assemblies having finger-like projections.

It will be understood that through this specification the terms finger-like and fingers will be used interchangeably to describe elongate protrusions. The terms conveyor belt and belt conveyor will also be used interchangeably. It will also be understood that whilst the number n, of finger-like projections is described as a first body having n finger-like projections and a second body having n-1 finger-like projections in the claims, this could alternatively be written as a second body having n finger-like projections and a first body having n+1 finger like projections. It will be readily understood that the scraper blade comprises two bodies and that one body has more finger-like projections than the other body.

### Summary of the Invention

According to a first aspect there of the present invention, there is provided a scraper blade unit comprising A scraper blade unit (5000) for a belt conveyor comprising a first scraper blade (5001) comprising two or more projections (5005a); a second blade (5002) comprising two or more projections (5005b); each of the individual projections (5005a,5005b) of said first and second scraper blades having a width w1, and each said individual projection being separated by a gap (5006) having a width w2; the width w2 of said gap (5006) being greater than or equal to the width w1 of said individual projection (5005a, 5005b); each of first and second scraper blades being attachable to a support beam; characterised that in use, said two or more projections of the first scraper blade (5005a) may bend over and become interleaved with said two or more projections (5005b) of the second scraper blade; such that said two or more projections (5005a) of the first scraper blade may occupy the gaps (5006) between said two or more projections (5005b) of the second scraper blade.

Preferably, the two or more projections are each finger-like projections.

Advantageously, the two or more projections comprise a synthetic plastics material. Preferably polyurethane, which is a flexible and durable material and suitably easy to mould.

Preferably, the two or more projections are each elongate bodies having a rectangular cross-section. A shape which gives uniform pressure application at the surface in contact with the conveyor belt.

It is envisaged that different grades of polyurethane are used for different regions of each of said two or more projections to provide different characteristics of stiffness to different parts of said two or more projections.

The two or more projections may further comprises means adapted to engage with a belt conveyor surface to improve cleaning of the belt upon contact. Preferably, the means adapted to engage with a belt conveyor surface are tips made of carbide or stainless steel. Carbide has a particularly high wear resistance whilst stainless steel also increases the wear resistance and provides a cheaper alternative to carbide. The tips may be also be made from tungsten carbide.

It is envisaged that the two or more projections each have a width *w₁* in a first direction, said projections being separated by a gap; the width of the gap *w₂* in said first direction is greater than or equal to the width of an individual projection; and a second scraper blade having two or more projections each projection having a width *w₁* in a first direction, said projections being separated by a gap; the width of the gap *w₂* in said first direction is greater than or equal to the width of an individual projection; wherein the number of individual projections on the first scraper blade is *n* and the number of individual projections on the second scraper blade is *n-1.*

Preferably, the scraper blade assembly further comprises a support frame.

According to a further aspect of the present invention, there is provided a scraper blade assembly comprising:
a support beam having a main length with first and second sides;
a first row of projections attachable to a first side of said support beam;
a second row of projections attachable to a second side of said support beam;
said first and second rows of projections being spaced apart from each other in a direction across a main length direction of said support beam;
wherein at least one of said first and second rows of projections are moveable in a direction across a said main length direction of said support beam; and
wherein individual projections of said first and second rows of projections are interspaced in said main direction of said support beam with respect to individual ones of said second row of projections
such that the individual projections of said first row of projections may occupy the space between individual projections of said second row of projections.

Preferably, the individual projections of the scraper blade assembly of the fourth aspect are finger-like projections.

Preferably, the scraper blade assembly of the fourth aspect further comprises a support frame.

It is envisaged that in the scraper blade assembly of the fourth aspect the number of individual projections on the first row is *n* and the number of individual projections on the second row is *n-1.*

It is an advantage of the present invention that all the finger-like projections of the scraper blade do not contact the belt conveyor at the same time. This gives a 50% reduction in impact on the belt.

It is further advantageous that the gap(s) between individual finger-like projection(s) prevents finger(s) sticking or being held together by material being removed from the belt conveyor.

Other aspects are as set out in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 is a side cross-section of a typical endless conveyor belt assembly with which the present invention may be used.
Figure 2 is a perspective view of a prior art scraper blade assembly for use with an endless conveyor.
Figure 3a is a front view of a first aspect of the scraper blade in accordance with the present invention.
Figure 3b is a side view of the first aspect of the scraper blade in accordance with the present invention.
Figure 4a is a front view of the second aspect of the scraper blade in accordance with the present invention.
Figure 4b is a side view of the second aspect of the scraper blade in accordance with the present invention.
Figure 5 is a front view of a unit comprising a scraper blade in accordance with a first aspect of the invention and a second aspect scraper blade in accordance with a second aspect of the invention.
Figure 6a is a perspective view of a scraper blade assembly of the present invention.
Figure 6b is a front view of a scraper blade assembly of the present invention.
Figure 6c is a top view of a scraper blade assembly of the present invention.
Figure 6d is a side view of a scraper blade assembly of the present invention.
Figure 7 is a front view of a scraper blade assembly of the present invention fitted behind the head pulley/roller.

### Details Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

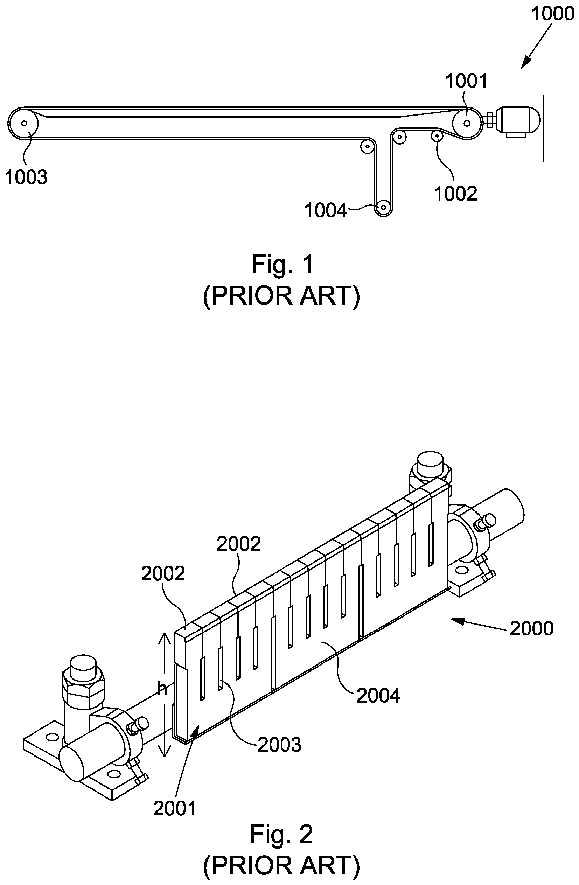

Referring to figure 1 herein there is shown a side cross-section of a typical endless conveyor belt assembly 1000 with which the present invention may be used. The conveyor belt assembly 1000 comprises several pulleys to support and deflect the belt as it progresses along the conveyor structure. These pulleys are namely, a head or drive pulley 1001 which is located at the discharge terminus of the conveyor and provides the driving force to the conveyor; a snub pulley 1002, which control the level of warp or the contact angle of the conveyor belt; a tail pulley 1003, which is adjustable to alter the tightness of the belt; a take-up pulley 1004 and a bend pulley 1005, which is used to alter the direction of the belt. The scraper blade of the present invention is suitable for fitting in any direction from the position of the snub pulley 1002 backwards.

Figure 2 is a perspective view of a prior art scraper blade assembly 2000 suitable for use with an endless conveyor. The scraper blade assembly 2000 comprises a single row of elongate finger-like projections 2001 each finger-like projection 2002 having a slit 2003 therebetween. The slits 2003 forming a series of parallel cuts so as to define the individual finger-like projections, such that the fingers are integral with a lower portion of the blade 2004. The finger-like projections 2002 being capable of deflection upon contact with a conveyor belt. The slits 2002 being narrow and extending about half of the height of the overall blade 2002 height h.

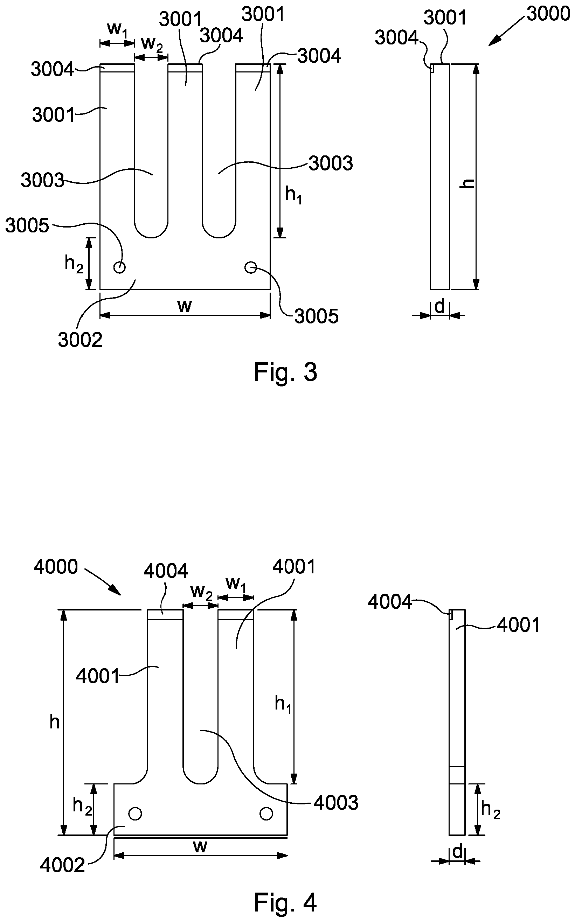

Referring to figure 3a herein there is shown a first aspect of the scraper blade in accordance with the present invention. The scraper blade 3000 comprises an elongate body having a height h of 180mm to 360mm preferably 260mm, a width w of 100mm to 1500mm, preferably 200mm and a depth d of 10mm to 50mm, preferably 20mm. The elongate body is formed of a rubber or a plastics material preferably polyurethane having a hardness of 60 Shore to 90 Shore on the Shore Hardness scale. Preferably the scraper blade is formed of a solid material without any internal cavities, although in other embodiments, the blade may include perforations or apertures. A first aspect of the scraper blade in accordance with the present invention has three projections 3001 which are finger-like protrusions extending approximately two thirds *h₁* of the height *h* of the overall blade. Preferably, *h₁* is 200mm and *h* is 260mm. Each finger-like projection 3001 is integral with a lower region of the blade 3002 having a height *h₂* which provides a support which is the continuous width *w* of the blade. Preferably, the height *h₂* of the support region 3002 is 60mm when the overall blade height *h* is 260mm. The support 3002 contains apertures 3005 to facilitate attachment of the blade to other structures e.g. a support beam which may ultimately be fitted to a conveyor belt. Each individual finger-like projection 3001 has a width *w₁* 10mm to 100mm and is separated from an adjacent neighbouring finger-like projection by a gap or void 3003 having a width *w₂*, *w₂* being greater than or equal to the width of an individual finger-like projection *w₁*. The finger-like projections 3001 can be square, rectangular or triangular. It will be understood that various proportions may be used for the blade, for example, the blade has a may have dimensions of 100×10×150mm, or 200×200×20mm.

The scraper blade may further comprise means 3004 adapted to engage with a belt conveyor surface, for example localized regions of carbide or stainless steel which increase friction, at the point of contact between the blade and a conveyor belt. These localized regions of carbide or stainless steel are called 'tips' and occupy approximately 2 to 30%, preferably 3 to 15% of the height *h₁* of the individual finger-like projection. It will be understood that as an alternative to the means adapted to engage with a belt conveyor surface or in addition to the means adapted to engage with the belt conveyor surface, the finger-like projections 3001 or an outer portion of the projections 3001 could comprise a material with a different Shore Hardness to the support region 3002 of the blade 3000, to increase the durability of the blade in the region which comes into contact with the belt.

Figure 3b is a side view of the first aspect of the scraper blade in accordance with the present invention. The scraper blade 3000 is an elongate body having a depth *d* of 20mm. The carbide or stainless steel tips 3004 may be surface mounted on the front face of the blade 3000 or recessed into a portion of the depth d of the finger-like projection 3001 of the blade 3000. In the embodiment shown, between a pair of adjacent fingerlike projections, a radius of curvature of the support region 3002 immediately between adjacent projections may be approximately half of the width of w₂, so as to avoid sharp angled corners or recesses in which dirt or debris may be more difficult to clean.

Referring to figure 4a herein there is shown a second aspect of the scraper blade in accordance with the present invention. The scraper blade 4000 comprises an elongate body having a height *h* of 180mm to 360mm, preferably 260mm, a width *w* of 100mm to 1500mm, preferably 200mm and a depth *d* of 10mm to 50mm, preferably 20mm. The second aspect of the scraper blade in accordance with the present invention has two projections 4001 which are finger-like protrusions extending a height *h₁* approximately two thirds of the height *h* of the overall blade. Preferably, *h_{1 is}* 200mm and *h* is 260mm. Each finger-like projection 4001 is integral with a lower region of the blade 4002 having a height *h₂* which provides a support which is the continuous width *w* of the blade. The support region 4002 may be made from a different thickness of plastic to the finger-like projections 4001. Preferably the height *h₂* of the support region 4002 is 60mm when the overall blade height *h* is 260mm. Each individual finger-like projection 4001 has a width *w₁* of 10mm to 100mm and is separated from an adjacent neighboring finger-like projection by a gap or void 4003 having a width *w₂*, *w₂* being greater than or equal to the width of an individual finger-like projection *w₁*. The finger-like projections 4001 can be square, rectangular or triangular.

The scraper blade may further comprise means 4004 adapted to engage with a belt conveyor surface, for example localized regions of carbide or stainless steel which increase friction at the point of contact between the blade and a conveyor belt. These localized regions of carbide or stainless steel are called 'tips' and occupy approximately 2 to 30%, preferably 3 to 15% of the height *h₂* of the individual finger-like projection. It will be understood that as an alternative to the means adapted to engage with a belt conveyor surface or in addition to the means adapted to engage with the belt conveyor surface, the finger-like projections 3001 or an outer portion of the projections 3001 could comprise a material with a different Shore Hardness to the support region 3002 of the blade 3000. When the material used for the projections 4001 is of a greater Shore Hardness than the support region 4002 of the blade the projections are essentially reinforced, have increased durability and the life of the blade can be extended. It will be understood that various proportions may be used for the blade, for example, the blade has a may have dimensions of 100×10×150mm, or 200×200×20mm.

The support 4002 contains apertures 4005 to facilitate attachment of the blade to other structures e.g. a support beam which may ultimately be fitted to a conveyor belt. It will be understood that other means of attachment may be used e.g. threaded projections suitable for interaction with an aperture.

Figure 4b is a side view of the second aspect of the scraper blade in accordance with the present invention. The scraper blade 4000 is an elongate body having a depth d of 20mm. The carbide or stainless steel tips 4004 may be surface mounted on the front face of the blade 4000 or recessed into a portion of the depth d of the finger-like projection 4001 of the blade 4000. Preferably the carbide or stainless steel tips 4004 are recessed a depth *d₁* of approximately 5 to 25%, preferably 20 % of the depth d of the finger-like projection.

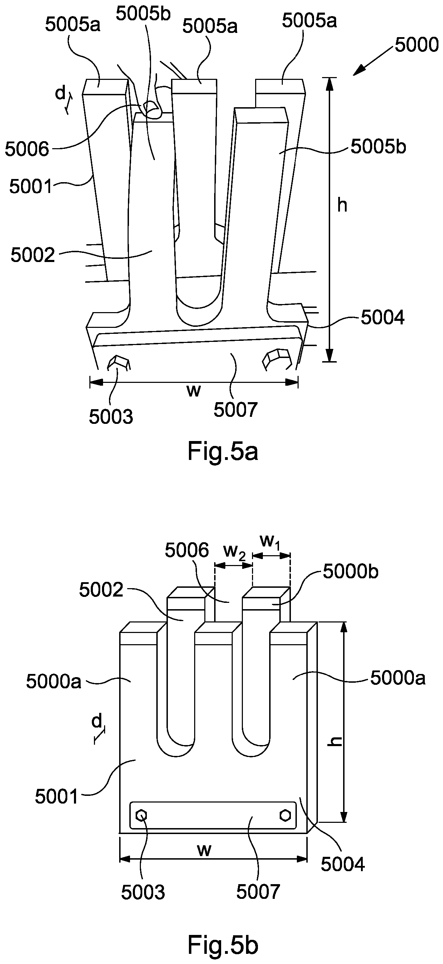

Figure 5a shows a scraper blade unit 5000 comprising a first scraper blade in accordance with a first aspect of the invention 5001 and a second scraper blade in accordance with a second aspect of the invention 5002. The first and second scraper blades are locatable opposite each other, a respective base portion of each said scraper blade being securely attachable to a support beam, the support beam being positioned between the two scraper blades, such that when the conveyor belt - contacting tips of the scraper blades are flexed or bent by the motion of the conveyor belt, finger - like projections of the first scraper blades may bend over and become interleaved with alternate ones of the finger - like projections of the second scraper blades, with the distal ends of the first finger - like projections occupying the voids between the distal ends of the second finger-like projections, and likewise the distal ends of the second finger-like projections occupying the voids between alternate ones of the first finger-projections.

In the first scraper blade unit 5000 a scraper blade having three finger-like projections in accordance with a first aspect of the invention 5001 (3000) is orientated in behind a two-fingered second scraper blade in accordance with a second aspect of the invention 5002 (4000). The individual blades 5001 and 5002 have the same width *w*, height *h* and depth *d*, which are preferably 200mm, 260mm and 20mm respectively. The first 5001 and second 5002 blades are aligned via connecting means 5003 which span through corresponding apertures in a support region 5004 at the base of each respective first 5001 and second blades 5002. Each of the finger-like projections 5005 of the first 5001 and second blades 5002 has the same width *w₁*, and are separated by a gap or void having a second width *w₂* The width of the gap or void *w₂* being greater than or equal to (≥) the width of an individual finger *w₁*. Because *w₂* ≥ *w₁* any or all of the two flexible polyurethane finger-like projections of the first blade 5005a which may be deflected upon contact with a conveyor belt surface may be received into the gaps 5006 between the finger-like projections of the second blade 5005b.

Figure 5b shows a second aspect of a scraper blade unit 5000 comprising a scraper blade in accordance with a first aspect of the invention 5001 and a scraper blade in accordance with a second aspect of the invention 5002. In the scraper blade unit 5000 a scraper blade having three finger-like projections in accordance with a first aspect of the invention 5001 (3000) is orientated in front of a two-fingered scraper blade in accordance with a second aspect of the invention 5002 (4000). The individual blades 5001 and 5002 have the same width *w*, height *h* and depth *d*, which are preferably 200mm, 260mm and 20mm respectively. The first 5001 and second 5002 blades are aligned via connecting means 5003 which span through corresponding apertures in a support region 5004 at the base of each respective first 5001 and second blades 5002. Each of the finger-like projections 5005 of the first 5001 and second blades 5002 has the same width *w₁*, and are separated by a gap or void having a second width *w₂* The width of the gap or void *w₂* being greater than or equal to (≥) the width of an individual finger *w₁* Because *w₂* ≥ *w₁* any combination of the three flexible polyurethane finger-like projections of the first blade 5005a which may be deflected upon contact with a conveyor belt surface may be received into the gaps 5006 having a width *w₂* between the finger-like projections of the second blade 5005b.

Referring to both figures 5a and 5b, each individual finger - like projection scrapes or wipes a corresponding width section along the overall width of the conveyor belt. The staggered arrangement of finger-like projections 5005 of the first 5001 and second 5002 blades ensure that all finger-like projections of the scraper blade are not in contact with the same width section of the belt of the conveyor at the same time. This gives a 50% reduction in impact force on the belt, compared to a scraper where the ends of the finger-like projections are in contact with the conveyor belt or across the whole width of the conveyor belt for a particular width of the conveyor belt. It is a further advantage that the gap(s) 5006 between individual finger-like projections 5005 prevent individual fingers from sticking together or being held together by material being removed from the belt conveyor. The alignment of first 5001 and second blades 5002 may be maintained by attachment means 5003such a screws and a flat plate 5007. When the screws 5003 are tightened pressure is distributed evenly along the clamping flat plate 5007 to ensure even pressure is exerted along the width w of the scraper blade unit. It will be understood that a scraper blade unit may be constructed from a first blade having n finger-like projections and a second blade having *n-1* projections. Alternatively, this may be represented as being blade unit constructed from a first blade having n finger-like projections and a second blade having n+1 projections. Therefore, it will be readily understood that non-limited exemplary scraper blade unit pairing may include units comprising 2&3 finger-like projections, 3&4 finger-like projections, 4&5 finger-like projections, 5&6 finger-like projections etc. One or more scraper blade unit may be considered a scraper blade assembly.

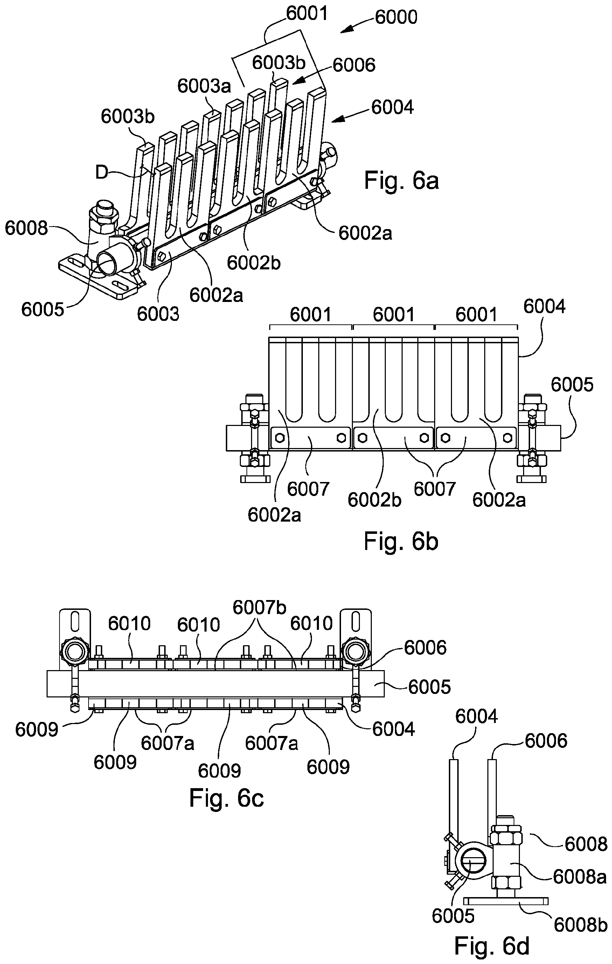

Figure 6a is a perspective view of a scraper blade assembly 6000 of the present invention. The assembly 6000 comprises three scraper blade units 6001 each comprising a first 6002 and second 6003 scraper blades. Each of the first scraper blades 6002 of the scraper blade units 6001 being arranged in a first row 6004 along a first side of a main length of a support beam 6005 and separated at a distance D from each of the second scraper blades 6003 arranged in a second row 6005 along a second side of the main length of the support beam 6005. The distance D is in the range 20mm to 200mm, preferably 70mm. Each individual scraper blade unit 6001 comprises a three-fingered scraper blade 6002a; 6003a and a two-fingered blade 6002a; 6003b. On each first 6002 and second 6003 row of the assembly, three-fingered 6002a; 6003a and two-fingered 6002b; 6003b scraper blades are arranged alternately. Overall there is a difference in the number n of finger-like projections between the first and second rows of the assembly of *n-1.* It is interchangeable whether the first 6004 or second 6006 row of scraper blades had the greatest number of individual finger-like projections. The alignment of first 6004 and second rows 6006 is maintained by bolt screw attachment means and a clamping flat plate 6007 for each individual scraper blade unit 6002. The assembly is a modular arrangement of individual scraper blade units 6002. Each scraper blade unit comprises a first and second scraper blade.

The support beam 6005 may be attached to a support frame 6008 which allows the entire assembly to be mounted adjacent to the conveyor belt which the scraper blade is intended to be used with. Upon contact with the conveyor belt the scraper blade removes debris which remains on the belt once the belt has passed the discharge terminus.

As shown in figure 6a, the entire support beam 6005 may be rotated within the mountings which connect the beam to the support frame 6008, to adjust the angle between the main length direction of the blades and the direction of travel of the conveyor belt.

Figure 6b shows a front view of a scraper blade assembly of the present invention. The front row 6004 of the assembly 6000 is visible and comprises three scraper blade units 6001 each comprising a first 6002 and second 6003 scraper blade. The front view of the first row 6004 of scraper blades mounted on a first side of a main length of a support beam 6005 is visible. The alignment of first 6004 and second rows 6006 is maintained by bolt screw attachment means and a clamping flat plate 6007 for each individual scraper blade unit 6002. The assembly is a modular arrangement of individual scraper blade

Figure 6c is a top view of a scraper blade assembly of the present invention. The support beam 6005 to which the first 6004 and second 6006 rows of scraper blades are attached via external 6007a and internal 6007b clamping flats is also shown. An external 6007a and internal 6007b clamping flat is provided for each individual scraper blade 6002; 6003 within a scraper blade unit 6001. The internal clamping flat 6007a being located between the support beam 6005 and a scraper blade 6002; 6003 and the external clamping flat 6007b being located on the external surface of a scraper blade 6002; 6003. The staggered alignment between finger-like projections 6009 of the first row 6004 and gaps between the finger-like projections 6010 of the second 6006 rows is shown.

Figure 6d is a side view of a scraper blade assembly of the present invention. The orientation of first 6004 and second 6006 rows of scraper blades along a first and second side of a main length of support beam 6005 is shown. The support beam 6005 being adjustably mounted on the support frame 6008 comprising an elongate strut 6008a and a footed plate portion 6008b.

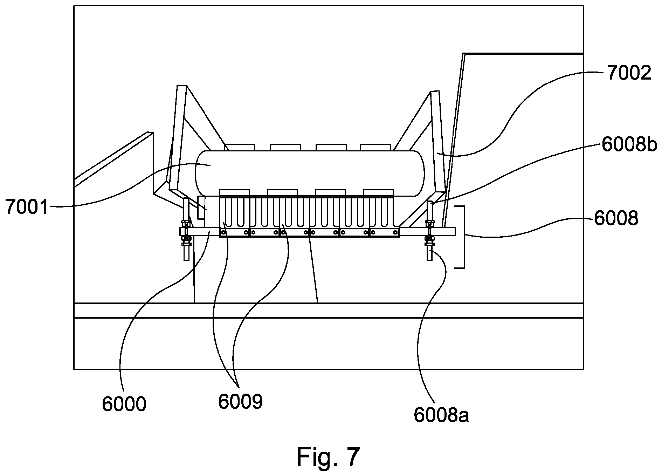

Figure 7 is a front view of a scraper blade assembly 6000 of the present invention fitted behind the head pulley/roller 7001 of an endless conveyor belt. The elongate strut 6008a of the support frame 6008 is substantially perpendicular to the main length of the support beam 6005 of the assembly 6000. At a first end of the elongate strut 6008a a footed plate portion 6008b is arranges transverse to the main length of the elongate strut 6008a, to create a right angle with the elongate strut 6008a. The footed plate 6008b is provided with apertures for receiving screws therethrough to mount the entire assembly 6000 to the underside of the frame 7002 of the conveyor belt.

The embodiments include a scraper assembly comprising:
at least one support beam or member;
a plurality of first fingers arranged in first row;
a plurality of second fingers arranged a second row;
said first and second rows of fingers being carried by said support beam or member;
wherein at least one of said first 6004 and second 6006 rows of projections are moveable/flexible in a direction across a said main length direction of said support beam or member; and
wherein individual fingers of said first and second rows of fingers/projections are interspaced in said main direction of said support beam or member with respect to individual ones of said second row of fingers/projections;
such that when flexed in a direction across a main length direction of said support beam or member, individual ones of said first row of fingers may occupy spaces between individuals ones of said second row of fingers.

In use, individual finger-like projections of the assembly 6009 when contacted by a cleat or protrusion on the conveyor belt 7001 can move into the gaps 6010 between the fingers on the blade behind. The gap between individual fingers stops fingers sticking or being held together by the material being removed from the belt. Thus maintaining the non-uniformity and ability of the blade to pass freely over cleats or joins.

It will be understood that various modifications of the invention will be apparent to those skilled in the art. For example the finger-like projections may have any form or shape or may be replaced with brushes or bristle-like projections.

It will be understood by those skilled in the art that although in the assembly described, a plurality of first type of scraper blades are arranged in a row along one side of a support beam, and a plurality of second type of scraper blades are arranged in a row along a second opposite side of the support beam, the arrangement may be reversed so that the first scraper blades are arranged along the second side of the beam and the second scraper blades are arranged in a row along the first side of the beam. It will also be understood by those skilled in the art that although the scraper blade assembly is shown oriented with the main length axis of the beam perpendicular to the main axis endless conveyor, in other installations, the main length direction of the beam may be oriented across the width of the conveyor at an angle other than 90° to the main length direction of the conveyor.

In the embodiments shown, individual fingerlike projections are arranged substantially parallel to each other, all having their main lengths pointing in a generally same direction as each other, wherein the fingerlike projections are arranged in rows and columns such that relative to a moving conveyor belt moving in a first direction, the conveyor belt encounters firstly a plurality of fingerlike projections of a first row, wherein as viewed across the main width of the conveyor belt, individual sections of the conveyor belt are contacted by the first fingerlike projections, leaving gaps between the individual fingerlike projections of said first row so that the first row of fingerlike projections acts in a comb like manner, and subsequently, as the conveyor belt moves further, a second row of fingerlike projections contacts the parts of the conveyor belt which have not been contacted by said first row of fingerlike projections, the second row of fingerlike projections forming a second comb, wherein the tips of the second row of fingerlike projections contact the strips of the conveyor belt which have travelled between the individual first fingerlike projections of the first row, so that the combined effect of the two rows of fingerlike projections is that each portion across the width of the conveyor belts is scraped either by the first row of projections or the second fingerlike projections.

However, the embodiments are not restricted so that the fingerlike projections of the respective first and second rows must contact alternate elongate strips of conveyor, the first and second rows of fingerlike projections interleaved with each other. In a direction as viewed along the direction of travel of the conveyor, in other embodiments, fingerlike projections of the first row may overlap in the direction of travel of the conveyor with fingerlike projections of the second row.

In the present specification, it will be understood that in any of the individual ones of the embodiments described, unless the context as described specifically excludes it, the individual fingerlike projections may be rigidly held in orientation to a conveyor belt such that a main plane of the travelling conveyor belt is held substantially perpendicular to a main length direction of one or a plurality of fingerlike projections in their undeformed / unbent state. However the embodiments are not restricted to such orientation respect to the main plane formed by a web of the conveyor belt, but in other installations of the embodiments, the fingerlike projections may be orientated having their main lengths in an undeformed / unbent state at an angle in the range 90° to 10°, and preferably in the range 90° to 45° relative to the main direction of travel of the conveyor belt.

Where the conveyor belt is changing direction of travel, for example around a pulley or roller, the angle of the main length of the fingerlike projections relative to the direction of travel of the conveyor at the point of contact between the fingerlike projections and a conveyor belt may be substantially 90°, or expressed in terms of the radius of a roller, may extend radially with respect except rotational axis of said roller. In other installations, where the fingerlike projections are installed near to or adjacent a roller, the main length axis of the fingerlike projections in an un - deformed state may extend at an acute angle with respect to a radius extending between the main horizontal rotational axis of the roller and the base of the fingerlike projections which are rigidly held.

## Claims

1. A scraper blade unit (5000) for a belt conveyor comprising:
a first scraper blade (5001) comprising two or more projections (5005a);
a second blade (5002) comprising two or more projections (5005b);
each of the individual projections (5005a,5005b) of said first and second scraper blades having a width *w₁*, and each said individual projection being separated by a gap (5006) having a width *w₂*;
the width *w₂* of said gap (5006) being greater than or equal to the width *w₁* of said individual projection (5005a, 5005b);
each of first and second scraper blades being attachable to a support beam;
characterised that in use, said two or more projections of the first scraper blade (5005a) may bend over and become interleaved with said two or more projections (5005b) of the second scraper blade;
such that said two or more projections (5005a) of the first scraper blade may occupy the gaps (5006) between said two or more projections (5005b) of the second scraper blade.

2. A scraper blade unit according to claim 1 wherein said two or more projections are each finger-like projections (5005a;5005b).

3. A scraper blade unit according to claim 1 or 2 wherein said two or more projections comprise a synthetic plastics material.

4. A scraper blade unit according to claim 3 wherein the synthetic plastics material is polyurethane.

5. A scraper blade unit according to any preceding claim wherein said two or more projections are each elongate bodies have a rectangular cross-section.

6. A scraper blade unit according to any of claims 4 or 5 wherein different grades of polyurethane are used for different regions of each of said two or more projections to provide different characteristics of stiffness to different parts of said two or more projections.

7. A scraper blade unit according to any preceding claim wherein at least one of said two or more projections comprises means (3004;4004) adapted to engage with a belt conveyor surface.

8. A scraper blade unit according to claim 7 wherein the means adapted to engage with a belt conveyor surface comprise stainless steel or carbide tips.

9. A scraper blade unit according to any preceding claim, wherein the number of individual projections (5005a) on the first scraper blade (5001) is *n* and the number of individual projections (5005b) on the second scraper blade (5002) is *n-1.*

10. A scraper blade assembly (6000) comprising:
at least one scraper blade unit according to any of claims 1 to 9 and
a support beam (6005).

11. A scraper blade assembly (6000) according to claim 10 further comprising a support frame (6008).

12. A scraper blade assembly (6000) comprising:
a support beam (6005) having a main length with first and second sides;
a first row of projections (6004) attachable to a first side of said support beam (6005);
a second row of projections (6006) attachable to a second side of said support beam (6005);
said first (6004) and second (6006) rows of projections being spaced apart from each other in a direction across a main length direction of said support beam;
wherein at least one of said first (6004) and second (6006) rows of projections are moveable in a direction across a said main length direction of said support beam; and
wherein individual projections (6009) of said first and second rows of projections are interspaced in said main direction of said support beam with respect to individual ones of said second row of projections
**characterized in that** the individual projections (6009) of said first row of projections (6004) may occupy the space (6010) between individual projections (6009) of said second row of projections (6006).

13. A scraper blade assembly (6000) according to claim 12 wherein the individual projections (6009) are finger-like projections.

14. A scraper blade assembly (6000) according to claim 12 or 13 further comprising a support frame (6008).

15. A scraper blade assembly (6000) according to any of claims 12 to 14 wherein the number of individual projections (6009) on the first row (6004) is *n* and the number of individual projections (6009) on the second row (6006) is *n-1.*

## Patentansprüche

1. Abstreiflamelleneinheit (5000) für einen Bandförderer, umfassend:
eine erste Abstreiflamelle (5001), umfassend zwei oder mehrere Vorsprünge (5005a);
eine zweite Lamelle (5002), umfassend zwei oder mehrere Vorsprünge (5005b);
wobei jeder der einzelnen Vorsprünge (5005a, 5005b) der ersten und der zweiten Abstreiflamelle eine Breite *w₁* aufweist und jeder einzelne Vorsprung durch eine Lücke (5006) getrennt ist, die eine Breite *w₂* aufweist;
wobei die Breite *w₂* der Lücke (5006) größer als oder gleich wie die Breite *w₁* des einzelnen Vorsprungs (5005a, 5005b) ist;
wobei die erste und die zweite Abstreiflamelle jeweils an einem Tragbalken angebracht sein können;
**dadurch gekennzeichnet, dass** die zwei oder die mehreren Vorsprünge der ersten Abstreiflamelle (5005a) in Verwendung über die zwei oder die mehreren Vorsprünge (5005b) der zweiten Abstreiflamelle biegen und damit verschachtelt werden können;
sodass die zwei oder die mehreren Vorsprünge (5005a) der ersten Abstreiflamelle die Lücken (5006) zwischen den zwei oder den mehreren Vorsprüngen (5005b) der zweiten Abstreiflamelle einnehmen können.

2. Abstreiflamelleneinheit nach Anspruch 1, wobei die zwei oder die mehreren Vorsprünge jeweils fingerartige Vorsprünge (5005a; 5005b) sind.

3. Abstreiflamelleneinheit nach Anspruch 1 oder 2, wobei die zwei oder die mehreren Vorsprünge ein synthetisches Kunststoffmaterial umfassen.

4. Abstreiflamelleneinheit nach Anspruch 3, wobei das Kunststoffmaterial Polyurethan ist.

5. Abstreiflamelleneinheit nach einem der vorherigen Ansprüche, wobei die zwei oder die mehreren Vorsprünge jeweils längliche Körper sind, die einen rechteckigen Querschnitt aufweisen.

6. Abstreiflamelleneinheit nach einem der Ansprüche 4 oder 5, wobei verschiedene Polyurethanqualitäten für verschiedene Bereiche von jedem der zwei oder der mehreren Vorsprünge verwendet werden, um verschiedenen Teilen der zwei oder der mehreren Vorsprünge verschiedene Steifigkeitseigenschaften bereitzustellen.

7. Abstreiflamelleneinheit nach einem der vorherigen Ansprüche, wobei mindestens einer der zwei oder der mehreren Vorsprünge eine Einrichtungen (3004; 4004) umfasst, die angepasst sind, um mit einer Bandfördereroberfläche einzugreifen.

8. Abstreiflamelleneinheit nach Anspruch 7, wobei die Einrichtungen, die angepasst sind, um mit einer Bandfördereroberfläche einzugreifen, Edelstahl- oder Karbid-Spitzen umfassen.

9. Abstreiflamelleneinheit nach einem der vorherigen Ansprüche, wobei die Anzahl der einzelnen Vorsprünge (5005a) an der ersten Abstreiflamelle (5001) *n* ist und die Anzahl der einzelnen Vorsprünge (5005b) an der zweiten Abstreiflamelle (5002) *n-1* ist.

10. Abstreiflamellenanordnung (6000), umfassend:
mindestens eine Abstreiflamelleneinheit nach einem der Ansprüche 1 bis 9 und
einen Tragbalken (6005).

11. Abstreiflamellenanordnung (6000) nach Anspruch 10, ferner umfassend einen Tragrahmen (6008).

12. Abstreiflamellenanordnung (6000), umfassend:
einen Tragbalken (6005), der eine Hauptlänge mit einer ersten und einer zweiten Seite aufweist;
eine erste Reihe von Vorsprüngen (6004), die an einer ersten Seite des Tragbalkens (6005) angebracht werden können;
eine zweite Reihe von Vorsprüngen (6006), die an einer zweiten Seite des Tragbalkens (6005) angebracht werden können;
wobei die erste (6004) und die zweite (6006) Reihe von Vorsprüngen in einer Richtung quer zu einer Hauptlängenrichtung des Tragbalkens voneinander beabstandet sind;
wobei mindestens eine von der ersten (6004) und der zweiten (6006) Reihe von Vorsprüngen in einer Richtung quer zu der Hauptlängenrichtung des Tragbalkens bewegbar ist; und
wobei einzelne Vorsprünge (6009) von der ersten und der zweiten Reihe von Vorsprüngen in der Hauptrichtung des Trägerbalkens in Bezug auf einzelne Vorsprünge der zweiten Reihe von Vorsprüngen beabstandet sind
**dadurch gekennzeichnet, dass** die einzelnen Vorsprünge (6009) der ersten Reihe von Vorsprüngen (6004) den Raum (6010) zwischen einzelnen Vorsprüngen (6009) der zweiten Reihe von Vorsprüngen (6006) einnehmen können.

13. Abstreiflamellenanordnung (6000) nach Anspruch 12, wobei die einzelnen Vorsprünge (6009) fingerartige Vorsprünge sind.

14. Abstreiflamellenanordnung (6000) nach Anspruch 12 oder 13, ferner umfassend einen Tragrahmen (6008).

15. Abstreiflamellenanordnung (6000) nach einem der Ansprüche 12 bis 14, wobei die Anzahl der einzelnen Vorsprünge (6009) in der ersten Reihe (6004) *n* ist und die Anzahl der einzelnen Vorsprünge (6009) in der zweiten Reihe (6006) *n-1* ist.

## Revendications

1. Unité de lame de raclage (5000) pour un convoyeur à bande comprenant :
une première lame de raclage (5001) comprenant deux saillies ou plus (5005a) ;
une deuxième lame (5002) comprenant deux saillies ou plus (5005b) ;
chacune des saillies individuelles (5005a, 5005b) desdites première et deuxième lames de raclage ayant une largeur *w₁*, et chacune desdites saillies individuelles étant séparée par un espace (5006) ayant une largeur *w₂* ;
la largeur w₂ dudit espace (5006) étant supérieure ou égale à la largeur *w₁* de ladite saillie individuelle (5005a, 5005b) ;
chacune des première et deuxième lames de raclage pouvant être fixée à une poutre de support ;
**caractérisée en ce qu'**en cours d'utilisation, lesdites deux saillies ou plus de la première lame de raclage (5005a) peuvent se plier au-dessus et s'intercaler avec lesdites deux saillies ou plus (5005b) de la deuxième lame de raclage ;
de sorte que lesdites deux saillies ou plus (5005a) de la première lame de raclage puissent occuper les espaces (5006) entre lesdites deux saillies ou plus (5005b) de la deuxième lame de raclage.

2. Unité de lame de raclage selon la revendication 1, dans laquelle lesdites deux saillies ou plus sont chacune des saillies en forme de doigts (5005a ; 5005b).

3. Unité de lame de raclage selon la revendication 1 ou 2, dans laquelle lesdites deux saillies ou plus comprennent une matière plastique synthétique.

4. Unité de lame de raclage selon la revendication 3, dans laquelle la matière plastique synthétique est du polyuréthane.

5. Unité de lame de raclage selon l'une quelconque des revendications précédentes, dans laquelle lesdites deux saillies ou plus sont chacune des corps allongés ayant une section transversale rectangulaire.

6. Unité de lame de raclage selon l'une quelconque des revendications 4 ou 5, dans laquelle différentes qualités de polyuréthane sont utilisées pour différentes régions de chacune desdites deux saillies ou plus pour fournir différentes caractéristiques de rigidité à différentes parties desdites deux saillies ou plus.

7. Unité de lame de raclage selon l'une quelconque des revendications précédentes, dans laquelle au moins l'une desdites deux saillies ou plus comprend des moyens (3004 ; 4004) adaptés pour s'engager avec une surface de convoyeur à bande.

8. Unité de lame de raclage selon la revendication 7, dans laquelle les moyens adaptés pour s'engager avec une surface de convoyeur à bande comprennent des pointes en acier inoxydable ou en carbure.

9. Unité de lame de raclage selon l'une quelconque des revendications précédentes, dans laquelle le nombre de saillies individuelles (5005a) sur la première lame de raclage (5001) est n et le nombre de saillies individuelles (5005b) sur la deuxième lame de raclage (5002) est *n-1.*

10. Ensemble de lame de raclage (6000) comprenant :
au moins une unité de lame de raclage selon l'une quelconque des revendications 1 à 9 et
une poutre de support (6005).

11. Ensemble de lame de raclage (6000) selon la revendication 10, comprenant en outre un châssis de support (6008).

12. Ensemble de lame de raclage (6000) comprenant :
une poutre de support (6005) ayant une longueur principale avec des premier et second côtés ;
une première rangée de saillies (6004) pouvant être fixées à un premier côté de ladite poutre de support (6005) ;
une seconde rangée de saillies (6006) pouvant être fixées à un second côté de ladite poutre de support (6005) ;
lesdites première (6004) et seconde (6006) rangées de saillies étant espacées l'une de l'autre dans une direction transversale à une direction longitudinale principale de ladite poutre de support;
dans lequel au moins l'une desdites première (6004) et seconde (6006) rangées de saillies est mobile dans une direction transversale à ladite direction longitudinale principale de ladite poutre de support ; et
dans lequel des saillies individuelles (6009) desdites première et seconde rangées de saillies sont écartées dans ladite direction principale de ladite poutre de support par rapport à des saillies individuelles de ladite seconde rangée de saillies
**caractérisé en ce que**
les saillies individuelles (6009) de ladite première rangée de saillies (6004) peuvent occuper l'espace (6010) entre les saillies individuelles (6009) de ladite seconde rangée de saillies (6006).

13. Ensemble de lame de raclage (6000) selon la revendication 12, dans lequel les saillies individuelles (6009) sont des saillies en forme de doigts.

14. Ensemble de lame de raclage (6000) selon la revendication 12 ou 13 comprenant en outre un châssis de support (6008).

15. Ensemble de lame de raclage (6000) selon l'une quelconque des revendications 12 à 14, dans lequel le nombre de saillies individuelles (6009) sur la première rangée (6004) est n et le nombre de saillies individuelles (6009) sur la seconde rangée (6006) est *n-1.*
